# EUROPEAN PATENT APPLICATION

(11) **EP 2 725 535 A1**
(43) Date of publication of application: **30.04.2014**
(21) Application number: 12306327.3
(22) Date of filing: 25.10.2012
(51) Int. Cl.: G06Q 20/02

(54) **System and method for securely store and transfer electronic money**

(71) Applicant: Gemalto SA, 92190 Meudon (FR)
(72) Inventor: Gouget, Aline, 92190 Meudon (FR); Gaston, Lorenzo, 92190 Meudon (FR)

(57) **Abstract**

The invention relates to a system (1) for issuing electonic money, transfering said money from an e-Money sender (30) to an e-Money receiver (40) and compensating said money, said system comprising an issuer (10) or e-Money Issuer for issuing said electonic money, characterized in that it comprises at least one regulated entity (60), so that the issuance of the electonic money is regulated, and the transfer and subsequent usage or misuse of the e-money is monitored.

## Description

### FIELD OF THE INVENTION

The present invention relates generally to secure money transfers and storage using mobile electronic money as a payment instrument and more specifically to a method and a system to securely store mobile electronic money.

### BACKGROUND OF THE INVENTION

Electronic money is known as e-money, electronic cash, electronic currency, digital money, digital cash, digital currency, a dematerialized format for central bank currency, ...

It is also known as an Electronic store of monetary value on a personal technical device which can be a card-based product or software-based product or a remote store of monetary value at a server, managed by the money holder through a specific account for electronic money.

Small value payment or small value transfer become uneconomic when transactions costs are high.

Everyone does not have a bank account or a regular subscription to a mobile network operator (MNO) enabling the billing though the MNO subscription. Mobile prepaid e-money is a means of payment suitable for financially underserved / unbanked people.

When attempting to design transactions with a digital money based on a cryptographic signature, the risk of the "double-spending" fraud arises. Techniques to mitigate this problem have to be implemented such as the use of expiry dates for the e-money and/or for the credentials used for the e-money authentication.

There is a need for providing a solution which minimizes the risk for the receiver of electronic money, stored on her/his mobile to be stolen and to facilitate the automatic renewal of validity period for the transfer of the e-Money and/or the credentials used for authentication.

Thereto, an object of the invention to provide a system for issuing electonic money, transfering said money from an e-Money sender to an e-Money receiver and compensating said money, said system comprising an issuer or e-Money Issuer for issuing said electonic money, **characterized in that** it comprises at least one regulated entity, so that the issuance of the electonic money is regulated, and the transfer and subsequent usage or misuse of the e-money is monitored.

According to another aspects of the invention,the electonic money may be cryptographically protected, using credentials issued by said at least one regulated entity and/or the issuer.

The invention also provides a method for preventing and/or detecting a fraud when transferring electronic money from an e-Money sender to an e-Money receiver, said electronic money being issued by an e-Money issuer, **characterised in that** it comprises a step of transferring electronic money only to an authorized entity registered by a regulated entity.

According to another aspect of the invention, the method may comprise identifying the origin of the fraud, and depending on the kind of fraud, identifying the fraud origin either by the e-Money Issuer only or by cooperation between the e-Money Issuer and the regulated entity.

According to another aspect of the invention, the method may comprise providing the e-Money receiver with a pre-defined set of credentials and/or pseudo-certificates upon registration by the regulator entity.

According to another aspect of the invention, the method may comprise storing the electronic money or at least a secret to transfer with the electronic money in a secure element.

According to another aspect of the invention, the method may comprise transmitting by the e-Money receiver a public key with its associated pseudo-certificate so that to be able to be recognized as an authorized user by the e-Money sender.

According to another aspect of the invention, the method may comprise including the public key of the receiver in the e-Money to be transferred.

According to another aspect of the invention, the method may comprise providing credentials associated with particular parameters encoding rights or usage constraints for the received e-Money, such credentials being required for any electronic money transfer.

According to another aspect of the invention, the method may the method may comprise transferring electronic money to the issuer of the electronic money, an authorized acquirer, an authorized merchant or the regulated entity.

According to another aspect of the invention, the method may comprise transferring the electronic money in a Peer-to-Peer mode, said electronic being transferable in part or totally.

According to another aspect of the invention, the electronic money may be stored by the regulated entity.

Thanks to the invention, it is advantageously possible to provide a new mechanism to transfer money efficiently and which facilitates the access of unbanked people to financial services.

The invention advantageously enables a user equipped with a mobile phone to be able to receive mobile electronic money from other users, which are also equipped with mobile phones, or directly from governmental bodies, without the obligation at any time to open an account at the electronic money issuer or to subscribe to a service provided by the e-money issuer, even if the user does not have a bank account or a regular MNO subscription.

The invention advantageously enables the protection of the received e-Money against robbery and avoids complex operations by an end user who is not necessary technically skilled.

The invention advantageously enables the control by the user which is the originator of the transaction to bound the future usage of the corresponding electronic money, e.g. the money can be transferred at most once before deposit or the money can only be transferred to a bank account.

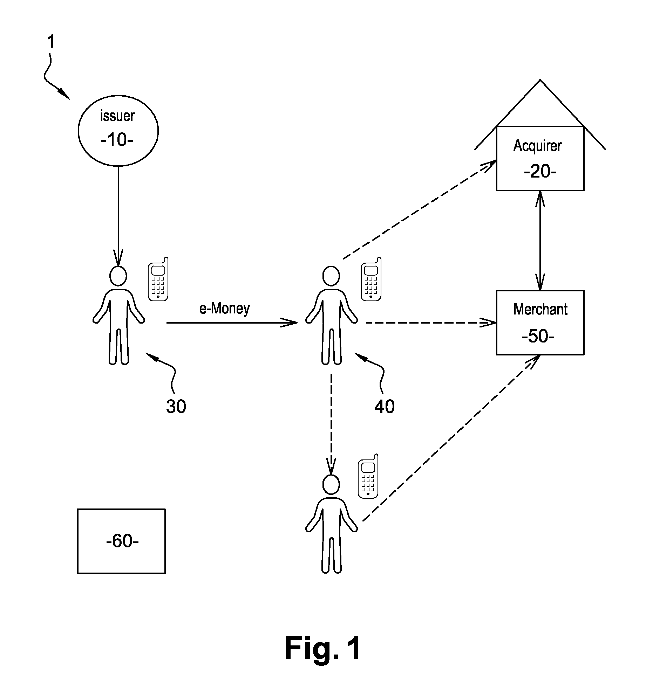

The various aspects, features and advantages of the invention will become more fully apparent to those having ordinary skill in the art upon careful consideration of the following Detailed Description, given by way of example thereof, with the accompanying drawing described below: **FIG.1** schematically shows an architecture of a system according to the present invention.

### DETAILED DESCRIPTION

The present invention may be understood according to the detailed description provided herein.

Shown in figure 1 is an architecture of a system 1 for the issuance, acceptance and settlement of electronic money called hereinafter e-Money.

In a first embodiment, the system 1 comprises an issuer 10 or e-Money Issuer, an acquirer 20, an e-Money sender 30, an e-Money receiver 40, and a merchant 50.

The e-Money sender 30 is able to withdraw e-Money from the e-Money Issuer 10, which is for example a bank or a Mobile Telecom Operator. It will be well understood that the form of e-Money can also be issued by a Credit Institution or by any other entity entitled to issue e-Money. Indeed, the issuance of e-Money is regulated and any e-Money Issuer is granted with a licence. The system 1 also comprises at least a regulated entity 60, also called hereinafter e-Money Judge or e-Judge 60.

The role of the e-Judge is regulated. A licence for e-Judge activity is required from a Financial Authority, either national, e.g. a Central Bank, or international, e.g. the World Bank. In some cases, the e-Judge provides authorized users with e-Money Cloud Computing Services for e-Money temporary storage and later transfer. The e-Money can only be purchased by and transferred to an authorized user, either a legal or physical person. The term "authorized" refers to any entity or person registered by the e-Money Judge 60 or by any e-Money issuer 10.

The e-Judge is a then regulated supervisary entity (50), so that the issuance of the electonic money is regulated, and the transfer and subsequent usage or misuse of the e-money is monitored by different regulated authorities which have to be granted a licence.

Credentials are issued by e-Money issuers or by the e-Judge 60 and entitle an authorized issuer with a certain number of rights within the system 1. The presentation of these credentials is required by the protocols involved in any e-Money transfer. The e-Judge 60 may provide system credentials to an individual, a merchant, or an e-Money Acquirer.

The e-Money can be transferred by the e-Money sender 30 to a user-payee, to the Issuer of e-Money or to an authorized e-Money Acquirer/agent, for example to get cash in exchange of the e-Money or to transfer the e-Money to an account. The e-Money can also be transferred to an authorized Merchant in exchange of a good or a service. The e-Money can also be transferred to the e-Judge itself to keep the money securely stored, e.g. under the responsibility of the Judge.

For any e-Money transaction from the e-Money sender 30 to the e-Money receiver 40, a method according to the invention comprises a step of registration wherein the e-Money receiver 40 is registered by the e-Judge 60.

In this embodiment, the method comprises transferring the e-Money in a Peer-to-Peer mode, such as a NFC mode based on the Near Field Technology.

Upon registration of the e-Money receiver 40, the e-Money Judge 60 provides this new authorized user 40 with a pre-defined set of credentials or pseudo-certificates. The credentials delivered by the e-Judge 60 to the new authorized user 40 may be renewed regularly or on the user demand in order to provide a scalable level of anonymity.

The e-Money is cryptographically protected, with a certain number of intrinsic security properties, intended in particular to prevent forgery and to provide the users of the system with a pre-defined level of anonymity.

The e-Money is cryptographically protected using conventional digital signature technology together with pseudo-certificate issued by the e-Judge 60. The e-Money transactions are linkable when the same pseudo-certificate is used in that transactions. The renewal of pseudo-certificate performed by the e-Judge 60 provides a scalable level of anonymity though unlinkability of pseudo-certificates.

It will be well understood that this means to protect the e-Money is not a limted example. An advanced signature technology based on either blind signature or group signature can also be used to protect the e-Money.

Cryptographic features are adavantageously incorporated in the e-Money during its creation, transfer or compensation in order to prevent a certain number of identified attacks, e.g. e-Money forgery, or to ensure the detection of fraud such as a double expense and in order to allow the identification of the origin of this fraud. Depending on the kind of fraud, the identification of the fraud origin can be done either by the e-Money Issuer only for example if the e-Money receiver 40 is registered by the e-Money issuer 10, or by cooperation between the e-Money Issuer 10 and the e-Money Judge 60 for example if the e-Money receiver 40 is registered by the e-Money Judge 60.

Cryptography features also advantageously provide a scalable level of anonymity during the transfer of the e-Money. The level of anonymity depends on a scalable parameter of the e-Money withdrawal protocol between the e-Money purchaser and the e-Money Issuer. It also depends on a scalable parameter of the renewal of pseudo-certificates of signature public key which are issued by the e-Money Judge 60 to e-Money users. The level of anonymity may also depends on the information contained in the credential that are issued by the e-Money Judge.

Data transmitted during a transfer step of e-Money are not sensitive and do not need to be transmitted in a secure channel. For transferring the e-Money, the e-Money sender 30 has to verify that the e-Money receiver 40 is an authorized user, e.g registered either by the e-Money Judge 60 or by the e-Money Issuer 10. For doing so, the e-Money receiver 40 transmits to the e-Money sender 30 a public key pk with its pseudo-certificate Certe-Judge("pk",..) delivered to him by the e-Judge 60 or by the e-Money Issuer 10. A secret key "sk" of the e-Money receiver 40 associated to the public key "pk" is stored in a secure element of the e-Money receiver 40.

The e-Money receiver 40 then has to prove the knowledge of a secret key "sk" associated to the public key "pk". For doing so, the public key "pk" is securely included by the e-Money sender 30 in the e-Money in such a way that it will be necessary for the e-Money receiver 40 to use the secret key "sk" to be able to transfer again or deposit the e-Money transferred or part of it.

The e-Money Issuer 10 has the knowledge of the public key "pk" associated to the secret key "sk". The public key of the e-Money Issuer 10 noted "PKIssuer" is stored on a mobile device. Associated certificates to the public key "pk" may also be stored on the mobile device.

A secret key "SKIssuer" associated to the public key "PKIssuer" of the e-Money Issuer 10 is only known by the e-Money Issuer 10 and allows to sign the e-Money so that the e-Money can be authenticated. The e-Money is like a signature made by the e-Money Issuer 10 which uses its secret key "SKIssuer" to sign a message comprising an amount, a currency, the public key "pk" of the e-Money Receiver 40. It may also comprises other data.

The e-Money receiver 40 has the knowledge of the public key of the e-Money Issuer 10 "PKIssuer" and the knowledge of the associated certificate. He also has the knowledge of the public key of the user who initiates the transfer so that to be able to check the authenticity of the e-Money.

The secure element is for example a smart card of the type of a Subscriber Identity Module (SIM)/ Universal Integrated Circuit Card (UICC), Micro Secure Digital card... embedded in a mobile device such as a mobile handset. It will be well understood that this secure element is not a limitative example and that any other secure element may be used.

In another embodiment, the method comprises transferring the e-Money only to a bank account of the e-Money receiver 40.

The method also comprises transferring parameters defining the nature of the transfer. The nature of the transfer is a parameter determined by a the e-Judge 60 at the registration of the users, or by the issuer 10, or by the sender....

For example, the person who first initiates the transfer determines parameters or conditions the transfer has to fulfill. The e-Money receiver 40 is forced to validate the transfer by the e-Judge 60 so that the e-Money can be really delivered. Thus for international transfers, the e-Judge 60 is advantageously able to determine if the international transfer does not contravene the national regulation or can determine if the transfer amount si not going beyond predetermined thresholds.The e-Judge may also add constraints on the use of the e-Money included at the registration of the users. Such constraints are for example delivered to the e-Money sender 30 payer when he received the certificate of the e-Money receiver 40.

The issuer 10 may also for example determine the number of possible transfers...

Nature of the transfer may include but are not limited to the following examples:
- the e-Money is transferred for domestic use, for cross-border transfer or both; then when issued for cross-border transfers the e-Money is also tagged indicating that this e-Money is eligible for an international transfer. International e-Money Transfers are authorized by the e-Judge, who, in turn, is responsible for the application of the Know Your Customer rules in relation with anti-Laundering laws.
- the transfer is allowed for a single use only from the issuer to the e-Money sender 30 who first purchased the e-Money, to the merchant 20, to an issuer which can be different from the one which issued the e-Money;
- it is possible to stock the e-Money by the e-Judge as previously described. In order to prevent robbery, the method according to the invention comprises a step of transferring part of the e-Money or the total amount of the e-Money stored locally in the secure element to the e-Judge.
- the e-Money is self-locked. The e-Money represents a monetary value and the conditions for the usage of this value. Both the monetary value and the conditions for the usage are cryptographically protected. In addition, the e-Money sender 30 payer may add new conditions provided they don't contradict those specified e.g. by the issuer.
- the issued e-Money has a period of validity, renewable or not. After its validity deadline, the e-Money cannot longer be used to make any payment and is to be transferred either to a local e-Judge for storage for unbanked individuals, a bank account for banked individuals. it will be well understood that e-Judges can be deployed by regions so that users can request effective money in exchange of the e-Money to a local e-Judge. The e-Judge may either propose the owner to open an account in a local bank at no discount or to renegotiate a new validity period with the e-Money Issuer possibly paying a fee. The bank may renegotiate the renewal of validity period with the e-Money Issuer possibly paying a fee.

Such parameters on the nature of the transaction are for example included in the transferred data with the e-Money and the public key pk as described previously and are checked during the transfer step.

In another embodiment, the method comprises pre-issuing the e-Money. The e-Money sender 30 receives data indicating the amount and the entity entitled to accept or acquire the pre-issued e-Money. Such pre-issued e-Money is called hereafter Mobile Money Voucher (MMV), and such issuer is called MMV Issuer.

When the pre-issued e-Money is for example assigned to a particular type of expense, and when the e-Money receiver 40 is a person, the pre-issued e-Money or MMV is transferred to the e-Judge who addresses it to a local e-Judge to make it effective. When the entitled person to receive the pre-issued e-Money is an acquirer Bank, an account is for example opened with the equivalent to the e-Money after presention of the MMV to the MMV Issuer.

When the e-Money receiver 40 is a nominative local e-Money Issuer, this issuer issues the corresponding amount of e-Money after presenting the MMV to the MMV Issuer.

In any case, the pre-issued e-Money or MMV cannot be negotiated in markets.

Any receiver, either a physical or a legal person, have the possibility to verify whether the perceived e-Money has already been expended. In case of attempt to fraud, e.g. a double expending try, the method comprises sending an automatic notification to the e-Judge 60, said notification including the credential of the e-Money sender 30. The e-Judge is then able to deliver the identity of the e-Money sender 30.

## Claims

1. A system (1) for issuing electonic money, transfering said money from an e-Money sender (30) to an e-Money receiver (40) and compensating said money, said system comprising an issuer (10) or e-Money Issuer for issuing said electonic money, **characterized in that** it comprises at least one regulated entity (60), so that the issuance of the electonic money is regulated, and the transfer and subsequent usage or misuse of the e-money is monitored.

2. System according to claim 1, **characterized in that** the electonic money is cryptographically protected, using credentials issued by said at least regulated entity(60) and/or the issuer (10).

3. Method for preventing and/or detecting a fraud when transferring electronic money from an e-Money sender (30) to an e-Money receiver (40), said electronic money being issued by an e-Money issuer (10), **characterised in that** it comprises a step of transferring electronic money only to an authorized entity registered by a regulated entity (60).

4. Method according to claim 3, **characterized in that** it comprises identifying the origin of the fraud, and depending on the kind of fraud, identifying the fraud origin either by the e-Money Issuer only or by cooperation between the e-Money Issuer and the regulated entity (60).

5. Method according to claim 3 to 4, **characterized in that** it comprises providing the e-Money receiver (40) with a pre-defined set of credentials and/or pseudo-certificates upon registration by the regulator entity (60).

6. Method according to claim 3 to 5, **characterized in that** it comprises storing the electronic money or at least a secret to transfer with the electronic money in a secure element.

7. Method according to claim 3 to 6, **characterized in that** it comprises, transmitting by the e-Money receiver (40) a public key (pk) with its associated pseudo-certificate (Certe-Judge(pk,..)) so that to be able to be recognized as an authorized user by the e-Money sender (30).

8. Method according to claim 7, **characterized in that** it comprises including the public key (pk) of the receiver in the e-Money to be transferred.

9. Method according to claim 3 to 8, **characterized in that** it comprises providing credentials associated with particular parameters encoding rights or usage constraints for the received e-money, such credentials being required for any electronic money transfer.

10. Method according to one of the claims 3 to 9, **characterized in that** it comprised transferring electronic money to the issuer of the electronic money, an authorized acquirer, an authorized merchant or the regulated entity.

11. Method according to one of the claim 3 to 10, **characterized in that** it comprises transferring the electronic money in a Peer-to-Peer mode, said electronic being transferable in part or totally.

12. Method according to one of the previous claims 3 to 11, **characterized in that** the electronic money is stored by the regulated entity (60).
